# EUROPÄISCHE PATENTSCHRIFT

(11) **EP 1 181 141 B1**
(45) Veröffentlichungstag und Bekanntmachung des Hinweises auf die Patenterteilung: **16.10.2002**
(21) Anmeldenummer: 00930867.7
(22) Anmeldetag: 24.05.2000
(51) Int. Cl.: B29B 17/00, B29C 47/10, B02C 13/16, B02C 18/12

(54) **VORRICHTUNG UND VERFAHREN ZUM AUFBEREITEN VON, INSBESONDERE THERMOPLASTISCHEM, KUNSTSTOFFMATERIAL**
DEVICE AND METHOD FOR PREPARING PLASTIC MATERIAL, IN PARTICULAR THERMOPLASTIC MATERIAL
DISPOSITIF ET PROCEDE POUR TRAITER UNE MATIERE PLASTIQUE, NOTAMMENT THERMOPLASTIQUE

(30) Priorität: 02.06.1999 AT 99299
(43) Veröffentlichungstag der Anmeldung: 27.02.2002
(73) Patentinhaber: BACHER, Helmut, A-4490 St. Florian (AT); SCHULZ, Helmuth, A-4490 St. Florian (AT); WENDELIN, Georg, A-4033 Linz (AT)
(72) Erfinder: BACHER, Helmut, A-4490 St. Florian (AT); SCHULZ, Helmuth, A-4490 St. Florian (AT); WENDELIN, Georg, A-4033 Linz (AT)
(74) Vertreter: Wildhack, Helmut, Dipl.-Ing. Dr.
(86) Internationale Anmeldenummer: AT0000146
(87) Internationale Veröffentlichungsnummer: WO00074912

(56) Entgegenhaltungen:
- EP-A- 0 496 080
- WO-A-95/34418
- DE-A- 3 003 938
- DE-A- 4 333 849
- US-A- 4 222 728
- PATENT ABSTRACTS OF JAPAN vol. 1996, no. 04, 30. April 1996 (1996-04-30) & JP 07 313893 A (KUSATSU DENKI KK), 5. Dezember 1995 (1995-12-05)

## Beschreibung

Die Erfindung bezieht sich auf eine Vorrichtung zum wahlweise kontinuierlichen oder changenweisen Autberelten von, insbesondere thermoplastischem, Kunststoffmaterial, mit einem Aufnahmebehälter für das zu bearbeitende Material, in welchem um eine vertikale Achse umlaufende, mittels einer den Boden des Aufnahmebehälters durchsetzenden Welle angetriebene, auf das Material einwirkende Werkzeuge vorgesehen sind, die von einer Trägerschelbe getragen sind, und mit einer Schnecke zum Abtransport des Materiales aus dem Aufnahmebehälter, deren Gehäuse an eine Austragöffnung des Aufnahmebehälters angeschlossen ist, wobei die Austragöffhung tiefer als die Umlaufbahn der Werkzeuge und tiefer als die Trägerscheibe angeordnet ist und wobei im Aufnahmebehälter weitere bewegte Werkzeuge unterhalb der Trägerscheibe vorhanden sind, die das Material in die Austragöffnung fördern. Weiters bezieht sich die Erfindung auf ein Verfahren zum Aufbereiten solchen Kunststoffmateriales.

Derartige bzw. ähnliche Vorrichtungen sind bekannt, z.B. aus AT 396.900 B oder AT E 128.898 T. Bei der erstgenannten bekannten Konstruktion ist dem an das Schneckengehäuse angeschlossenen Aufnahmebehälter ein weiterer Behälter vorgeschaltet, in welchem ebenfalls auf das eingebrachte Material einwirkende Werkzeuge vorgesehen sind. Die beiden Behälter sind miteinander durch einen Rohrstutzen verbunden, der durch ein Ventil absperrbar ist, sodass der mit dem Schneckengehäuse verbundene Behälter unter Vakuum gesetzt werden kann.

Bei der zweitgenannten bekannten Konstruktion ist der Aufnahmebehälter in zwei übereinander angeordnete Kammern unterteilt, die miteinander nur Ober einen Kanal in Verbindung stehen. In diesem Kanal ist eine weitere Schnecke angeordnet, die das von den in der oberen Kammer befindlichen Werkzeugen behandelte Material in die untere Kammer transportiert, aus welcher das Material durch die erstgenannte Schnecke abtransportiert wird.

Beiden bekannten Vorrichtungen ist der Nachteil eines großen konstruktiven Aufwandes eigen. Weiters besteht der Nachteil, dass ein relativ hoher Prozentanteil der Kunststoffteilchen, die in die Vorrichtung gelangen, auf kürzestem Weg ohne Vorbehandlung, also ohne Zerkleinerung, Vorwärmung, Trocknung, Vorverdichtung usw., in die Plastifizierschnecke gelangen. Diese nicht oder mangelhaft behandeiten Kunststoffanteile bilden in der Schnecke Inhomogene Kunststoffnester, die der Qualität des Plastifikates abträglich sind. Will man daher Endprodukte, sei es Granulat oder in Formen extrudierte Gegenstände, mit der gewünschten gleichbleibenden Qualität erhalten, so muss die das mangelhaft aufbereitete Material aus dem Aufnahmebehälter abtransportierende Schnecke das gesamte von ihr geförderte Material am Schneckenausgang auf die gewünschte Qualität und Temperatur bringen, um das Material mit der gewünschten Homogenität extrudieren zu können. Diese Ausgangstemperatur muss relativ hoch gehalten werden, um sicherzustellen, dass alle Kunststoffteilchen genügend plastifiziert sind. Dies wiederum bedingt einen erhöhten Energieaufwand und darüber hinaus die Gefahr, dass durch die relativ hohe Ausgangstemperatur thermische Schädigungen des Kunstsfoffmateriales (Abbau der Molekülkettenlänge) zu befürchten sind. Die erst genannte bekannte Konstruktion, hat darüber hinaus den Nachteil, dass sie keine kontinuierliche Arbeitsweise zulässt. Die zweitgenannte Konstruktion hat weiters den Nachteil, dass das Kunststoffmaterial im plastischen Zustand oxydativen Reaktionen ausgesetzt ist.

Die Erfindung setzt sich zur Aufgabe, eine Vorrichtung der eingangs beschriebenen Art so zu verbessern, dass einerseits vermieden wird, dass frisch eingebrachtes Material in die Austragschnecke gelangt, ohne genügend bearbeitet zu sein, anderseits die Vorrichtung und ihr Betrieb wesentlich vereinfacht werden. Als Folge davon wird angestrebt, den zur Erreichung einer homogenen, guten Qualität des von der Schnecke geförderten Materiales nötigen Energieaufwand zu verringern. Die Erfindung löst diese Aufgabe dadurch, dass der oberhalb der Trägerscheibe befindliche obere Innenraumteil des Behälters über einen, zwischen dem Außenumfang der Tragerscheibe und der Seitenwand des Aufnahmebehälters bestehenden freien Ringspalt mit einem im selben Aufnahmebehälter befindlichen, unterhalb der Trägerscheibe angeordneten unteren Innenraumteil des Aufnahmebehälters in Verbindung steht, in welchem die weiteren bewegten Werkzeuge und die Austragöffnung angeordnet sind, wobei beim Umlauf der Tragerscheibe ein Anteil des im oberen Innenraumteil befindlichen Materiales durch den Ringspalt hindurch in den unteren Innenraumteil gelangt. Die von der Austragöffnung gebildete Einzugsöffnung der Austragschnecke liegt somit nicht auf der Höhe der von der Trägerscheibe getragenen Werkzeuge oder in kurzem Abstand darüber, sondern darunter. Durch den notwendigen freien Spalt zwischen dem Umfang der Trägerscheibe und der Innenwand des Aufnahmebehälters gelangt durch den Stopfeffekt der im oberen Innenraumteil umlaufenden, von der Trägerscheibe getragenen Werkzeuge ein Teil des in Umlaufbewegung gebrachten Kunststoffmateriales in den Bereich unter der Trägerscheibe, also in den unteren Innenraumteil, wo dieses Material durch die dort vorhandenen weiteren Werkzeuge nochmals bearbeitet und letztlich in die Austragöffnung des Behälters und somit in das Schneckengehäuse eingebracht wird. Die Zone, wo vorwiegend die Zerkleinerung bzw. Trocknung bzw. Vorwärmung des Materiales erfolgt, ist somit getrennt von der Zone, wo das Material in das Schneckengehäuse eingedrückt wird. Hierbei stellt sich nach einer kurzen Betriebszeit ein Gleichgewicht zwischen dem von der Schnecke unter der Trägerscheibe abgezogenen Materialvolumen und dem durch den Ringspalt von oben nach unten in den Raum unter der Trägerscheibe eintretenden Materialstrom ein. Dies hat zur Folge, dass der im wesentlichen mit von der Schnecke abzutransportierendem Material gefüllte Raum unterhalb der Trägerscheibe dem Abzug des Materiales, welches in Form einer Mischtrombe im Aufnahmebehälter umläuft, einen gewissen Widerstand entgegensetzt, sodass -wenn überhaupt- nur ein verschwindend geringer Anteil des frisch in den Aufnahmebehälter eingebrachten Materiales gleich nach unten in den Bereich unter der umlaufenden Trägerscheibe gelangen kann. Dies trägt dazu bei, eine ausreichende Verweilzeit des Materiales im Aufnahmebehälter, insbesondere in dessen Bereich oberhalb der Trägerscheibe, sicherzustellen. Damit wird die Temperatur des in die Austragöffnung des Aufnahmebehälters eingebrachten Materiales vergleichmäßigt, da im wesentlichen alle im Behälter befindlichen Kunststoffteile ausreichend vorbearbeitet werden. Die annähernd konstante Temperatur des ins Schneckengehäuse eintretenden Materiales hat zur Folge, dass die inhomogenen Kunststoffnester im Gehäuse der Extruderschnecke weitgehend eliminiert werden und dadurch die Schneckenlänge geringer gehalten werden kann als bei den bekannten Konstruktionen, da die Schnecke weniger Arbeit aufbringen muss, um das Kunststoffmaterial mit Sicherheit auf gleiche Plastifiziertemperatur zu bringen. Die konstante Eintrittstemperatur des Kunststoffmateriales in das Schneckengehäuse hat weiters eine gleichmäßige Vorverdichtung des Materiales im Schneckengehäuse zur Folge, was sich auf die Verhältnisse an der Extruderöffnung günstig auswirkt, insbesondere in Form eines gleichmäßigen Extruderdurchsatzes und einer gleichmäßigen Materialqualität am Extruderausgang. Die verkürzte Schneckenlänge ergibt eine Energieeinsparung und eine im Vergleich zu den bekannten Konstruktionen erniedrigte Verarbeitungstemperatur im Extruder, da ja die durchschnittliche Temperatur, mit welcher das Material in das Schneckengehäuse eintritt, gleichmäßiger ist als bei den bekannten Konstruktionen. Beim Erfindungsgegenstand muss somit das bearbeitete Kunststoffmaterial - gesehen über den gesamten Bearbeitungsvorgang - auf eine im Vergleich zu den bekannten Konstruktionen weniger hohe Temperatur bearbeitet werden, um die Sicherheit einer ausreichenden Plastifizierung zu haben. Dieser Abbau der Spitzentemperaturen hat die eingangs erwähnte Energieeinsparung zur Folge und weiters die Vermeidung einer thermischen Schädigung des zu verarbeitenden Materiales.

Wie ersichtlich, lässt sich die erfindungsgemäße Vorrichtung sowohl kontinuierlich, als auch chargenweise betreiben, sie ist daher universeller im Anwendungsbereich als die zweitgenannte bekannte Konstruktion und hat darüber hinaus gegenüber beiden eingangs beschriebenen bekannten Konstruktionen den Vorteil eines geringeren konstruktiven Aufwandes, schon durch die Möglichkeit der Verkürzung der Schneckenlänge. Weiters lässt sich die erfindungsgemäße Vorrichtung sowohl unter Vakuum als auch bei Normaldruck betreiben. Wenngleich sich die erfindungsgemäße Vorrichtung in erster Linie für die Aufbereitung thermoplastischen Kunststoffmateriales eignet, so ist auch die Verarbeitung andersartiger Kunststoffsorten möglich, insbesondere wenn diese als Füllmaterial in der zu verarbeitenden Masse aufscheinen.

Aus DE 30 03 938 A ist es bekannt, in einem Gehäuse, in welchem ein Sternmessersatz umläuft, unterhalb dieses Sternmessersatzes einen Ring anzuordnen, der von der Gehäuseinnenwand in das innere hervorragt und vom untersten Messer in geringem Abstand liegt. Zweck dieses Ringes ist, ein Durchfallen des behandelten Gutes am äußeren Rand der Messer zu verhindern. Der Abstand zwischen Ring und Messer soll also nicht von dem behandelten Gut durchsetzt werden, im Gegensatz zu dem zwischen Außenumfang der Trägerscheibe und Behälterseitenwand bestehenden freien Ringspalt der vorliegenden Erfindung. Außerdem lässt sich die bekannte Vorrichtung nicht kontinuierlich betreiben.

Gemäß einer bevorzugten Ausführungsform der Erfindung sind die weiteren bewegten Werkzeuge an einem Rotor befestigt, der mit der Welle drehschlüssig verbunden ist. Dies ergibt die Möglichkeit, mehrere weitere Werkzeuge so anzuordnen, dass sie einander nicht stören. Eine günstige Ausführungsform besteht hiebei darin, dass die weiteren bewegten Werkzeuge von am Rotor um vertikale Achsen im Bereich des Umfanges des Rotors schwenkbar aufgehängten Schlagwerkzeugen gebildet sind. Dies ergibt eine günstige Bearbeitung des Materiales im Bereich des Rotorumfanges und letztlich eine gute Einwirkung hinsichtlich der Einbringung des bearbeiteten Materiales in die Austragsöffnung des Behälters. Dieselben Vorteile ergeben sich bei einer Ausführungsvariante der Erfindung, bei welcher die weiteren bewegten Werkzeuge von am Rotor befestigten Schaufeln oder Messern gebildet sind, die gegebenenfalls nach außen entgegen der Umlaufrichtung gekrümmte oder abgewinkelte Flächen oder Kanten, insbesondere Schneidkanten, haben. Durch derartig geformte Schaufeln oder Messer ergibt sich eine Eindrückung des Kunststoffmateriales in das Schneckengehäuse, etwa vergleichbar mit einer spachtelartigen Wirkung. Ähnliche Vorteile ergeben sich gemäß einer weiteren Variante, wobei die weiteren Werkzeuge von an der Welle oder am Rotor befestigten Balken gebildet sind. Das gleiche gilt für eine weitere Variante, bei welcher auf der Welle zwei Trägerscheiben übereinander befestigt sind, deren untere die weiteren bewegten Werkzeuge tragt. Diese weiteren Werkzeuge können hiebei gleich ausgebildet sein wie jene Werkzeuge, die auf der oberen Trägerscheibe angeordnet sind, oder unterschiedlich.

Bei allen beschriebenen Varianten ist es günstig, die Umlaufbahn der weiteren bewegten Werkzeuge zumindest teilweise auf die Höhe der Austragsöffnung des Aufnahmebehälters zu legen, da auf diese Weise die Eindrückwirkung der weiteren bewegten Werkzeuge auf das in die Einzugsöffnung des Schneckengehäuses einzubringende Material bzw. der erwähnte Spachteleffekt bestmöglich ausgenützt wird.

Eine besonders günstige Konstruktion besteht im Rahmen der Erfindung darin, dass der Rotor von einem koaxial zur Welle angeordneten Block gebildet ist, dessen Mantelfläche näher zur Achse der Welle liegt als der Umfang der Trägerscheibe, sodass unterhalb der Trägerscheibe ein mit dem Ringspalt in freier Verbindung stehender Ringraum gebildet ist, in dem die weiteren bewegten Werkzeuge umlaufen. Dies gibt ein ausreichendes Aufnahmevolumen für das bearbeitete Material unterhalb der Trägerscheibe, was zur Sicherung einer hohen gleichmäßigen Verweilzeit der bearbeiteten Kunststoffteilchen im Aufnahmebehälter beiträgt. Um eine möglichst hohe Bearbeitung des Materiales auch im Raum unterhalb der Trägerscheibe zu erzielen, ist es günstig, erfindungsgemäß mehrere Sätze weiterer bewegter Werkzeuge übereinander, in Umfangsrichtung des Rotors verteilt, vorzusehen.

Durch Versuche hat es sich herausgestellt, dass sich besonders günstige Verhältnisse ergeben, wenn die in radialer Richtung der Welle gemessene Breite des freien Ringspaltes 20 bis 150 mm beträgt. Überraschenderweise hat es sich gezeigt, dass dieses Intervall unabhängig vom Behälterdurchmesser gilt. Die im obigen Rahmen gewählte Größe des Spaltes ist lediglich abhängig von der Art des zu bearbeitenden Kunststoffgutes. Für Folien ist z.B. eine andere Spaltbreite die günstigste als für kompaktes Kunststoffmaterial (Spritzgussteile usw.). Eine bevorzugte Ringspaltbreite ist 20 bis 100 mm.

Vorteilhaft ist auch beim Erfindungsgegenstand, dass er flexibel ist im Hinblick auf den Anschluss des Schneckengehäuses an den Aufnahmebehälter. Es ist jedoch günstig, das Gehäuse der Schnecke tangential an den Aufnahmebehälter anzuschließen, sodass die Austragöffnung des Aufnahmebehälters, weiche zugleich die Einzugsöffnung des Schneckengehäuses ist, am Mantel des Gehäuses liegt. Dies hat den Vorteil, dass der Extruderkopf oder sonstige Ausgangsbauteil des Schneckengehäuses am einen Stirnende des Schneckengehauses angeordnet werden kann, da der Antrieb der Schnecke vom anderen Stirnende der Schnecke her erfolgen kann. Dies vermeidet Umlenkungen des Materialstromes, welche bei am Mantel des Schneckengehäuses angeordneten Austrittsöffnungen unvermeidlich sind.

Das erfindungsgemäße Verfahren zum Aufbereiten von, insbesondere thermoplastischem, Kunststoffmaterial mittels in einem Aufnahmebehälter um eine vertikale Achse umlaufender Werkzeuge, wobei das Material aus dem Aufnahmebehälter mittels einer Schnecke ausgebracht wird, kennzeichnet sich dadurch, dass das Material im selben Aufnahmebehalter mittels zweier übereinander angeordneter Werkzeugsätze kontinuierlich in zwei aufeinander folgenden Stufen bearbeitet wird, wobei in der ersten, mittels des oberen Werkzeugsatzes durchgeführten Stufe das Material vorzerkleinert und/oder vorgewärmt und/oder vorgetrocknet und/oder vorgemischt wird, wogegen in der zweiten, mittels des unteren Werkzeugsatzes durchgeführten Stufe die gleiche Behandlung des Materiales, jedoch weniger intensiv als in der ersten Stufe, erfolgt und das Material von den Werkzeugen der zweiten Stufe der Schnecke zugeführt wird. Bei im Vergleich zu herkömmlichen Verfahren wesentlich geringerem Energieaufwand wird dadurch eine homogene, gleichmäßige Qualität des von der Schnecke gelieferten Materiales erzielt.

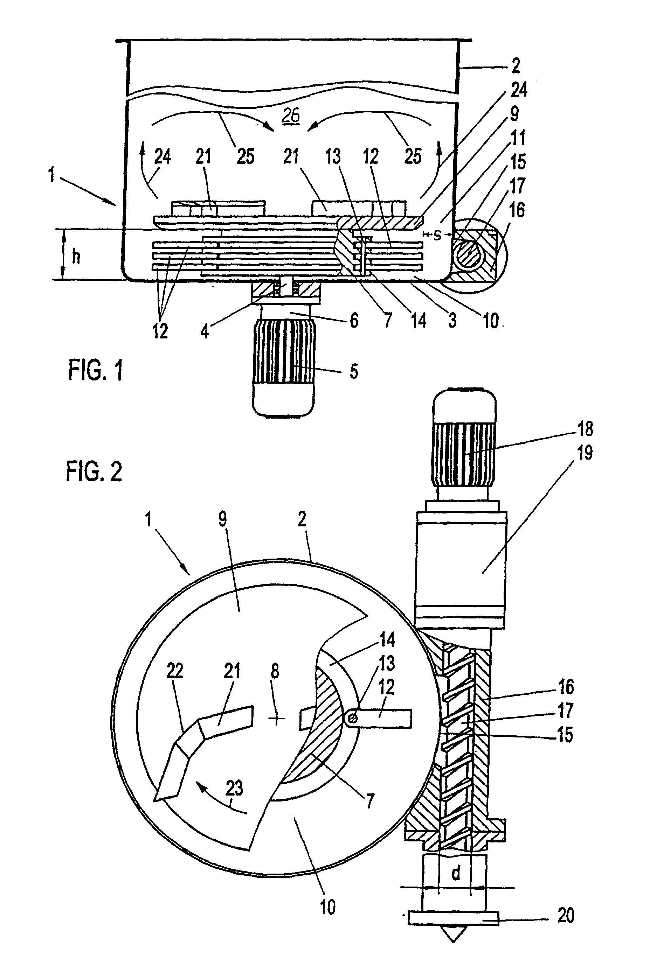

In der Zeichnung ist der Erfindungsgegenstand an Hand eines Ausführungsbeispieles schematisch dargestellt. Fig. 1 zeigt einen Vertikalschnitt durch die Vorrichtung und Fig. 2 eine Draufsicht auf dieselbe, teilweise im Schnitt.

Die Vorrichtung nach den Fig. 1 und 2 hat einen Aufnahmebehälter 1 für das zu verarbeitende, insbesondere thermoplastische, Kunststoffmaterial, das in diesen Behälter von oben mittels einer nicht dargestellten Fördereinrichtung, z.B. eines Förderbandes, eingebracht wird. Der Aufnahmebehälter 1 ist topfförmig mit vertikalen Seitenwänden 2, einem ebenen Boden 3 und mit Kreisquerschnitt ausgebildet. Den Boden 3 durchsetzt eine Welle 4, die konzentrisch zur mittigen, vertikalen Achse 8 des Behälters 1 verläuft. Die Welle 4 ist gegen den Boden 3 abgedichtet gelagert und durch einen unterhalb des Bodens 3 angeordneten Motor 5 mit Getriebe 6 zur Drehbewegung angetrieben. Im Behälter 1 sind mit der Welle 4 ein Rotor 7 und eine darüber angeordnete Trägerscheibe 9 drehschlüssig verbunden. Der Rotor 7 ist von einem kreiszylindrischen Block gebildet, dessen axiale Erstreckung wesentlich größer ist als jene der flachen Trägerscheibe 9 und dessen radiale Abmessung wesentlich geringer ist als jene der Trägerscheibe 9. Auf diese Weise wird unterhalb der Trägerscheibe 9 ein freier Innenraumteil 10 gebildet, der mit dem oberhalb der Trägerscheibe 9 befindlichen Innenraumteil 26 des Behälters 1 über den zwischen dem Außenumfang der Trägerscheibe 9 und der Seitenwand 2 des Behälters 1 bestehenden Ringspalt 11 in freier Strömungsverbindung für das bearbeitete Material steht. Durch diesen freien Ringspalt 11 kann somit das behandelte Kunststoffgut aus dem Raum 26 oberhalb der Trägerscheibe 9 ungehindert in den darunterliegenden ringförmigen Innenraumteil 10 gelangen. In diesem Ringraum sind Werkzeuge 12 angeordnet, welche in diesem Ringraum um die Achse 8 umlaufen und hiezu am Rotor 7 befestigt sind. Diese Befestigung ist von vertikalen Bolzen 13 gebildet, welche die inneren Enden der Werkzeuge 12, welche in Ringnuten 14 des Rotors 7 eingreifen, schwenkbar halten, sodass die Werkzeuge 12 um die Achsen der Bolzen 13 frei pendeln können. Die freien Enden der Werkzeuge 12 liegen im Abstand von der Seitenwand 2 des Behälters 1. Auf diese Weise bilden die Werkzeuge 12 Schlagwerkzeuge, die auf das im Innenraumteil 10 befindliche Kunststoffmaterial zusätzlich einwirken und dieses mischen und/oder zerkleinern und/oder erwärmen. Durch die von diesen Werkzeugen 12 auf das Kunststoffmaterial ausgeübte Fliehkraft wird das Kunststoffmaterial in eine Austragöffnung 15 des Behälters 1 gedrückt, welche Öffnung 15 auf der Höhe der Werkzeuge 12 liegt und den unteren Innenraumteil 10 des Behälters 1 mit dem Inneren eines zylindrischen Gehäuses 16 verbindet, in welchem eine Schnecke 17 drehbar gelagert ist. Diese Schnecke ist an ihrem einen Stimende durch einen Motor 18 mit Getriebe 19 zur Drehbewegung um ihre Achse angetrieben und fördert das ihr durch die Austragöffnung 15 zugeführte, vorbereitete Kunststoffmaterial zu ihrem anderen Stirnende, an welchem das fertig behandelte Kunststoffmaterial austritt. Das zugehörige Ende des Gehäuses 16 bildet z.B. einen Anschlussflansch 20, an welchen z.B. ein Werkzeug angeschlossen werden kann, das dem Kunststoff die gewünschte Form gibt. Wie ersichtlich, ist das Schneckengehäuse 16 annähemd tangential an den Behälter 1 angeschlossen, sodass die Austragöffnung 15 bzw. die zugehörige Öffnung im Gehäuse 16 an dessen Seitenwand liegt. Dies ermöglicht die erwähnte Anordnung von Motor 18 und Anschlussflansch 20 an den beiden Stimenden der Schnecke 17 bzw. des Gehäuses 16, sodass Umlenkungen des plastifizierten Kunststoffmateriales im Bereich seines Austrittes aus dem Gehäuse 16 vermieden sind.

Die Trägerscheibe 9 trägt ebenfalls Werkzeuge 21, die jedoch mit der Trägerscheibe 9 fest verbunden sind. Diese Werkzeuge 21 mischen und/oder zerkleinern und/oder erwärmen das im oberen Innenraumteil 26 des Behälters 1 befindliche Material. Für eine wirksame Zerkleinerung ist es zweckmäßig, die Werkzeuge 21 mit Schneidkanten 22 auszubilden. Wenn ein ziehender Schnitt gewünscht ist, ist es zweckmäßig, die Schneidkanten 22 gekrümmt oder, wie in Fig. 2 dargestellt, abgewinkelt auszubilden, und zwar in bezug auf die Radialrichtung der Trägerscheibe 9 entgegen der Umlaufrichtung der Trägerscheibe 9 (Pfeil 23) versetzt.

Im Betrieb ergibt sich beim Umlauf der Trägerscheibe 9 durch den Einfluss der Werkzeuge 21 ein Umlauf der in den Behälter 1 eingebrachten Kunststoffmasse, wobei das Kunststoffmaterial entlang der Seitenwand 2 des Behälters 1 im oberen Innenraumteil 26 hochsteigt (Pfeile 24), und im Bereich der Achse des Behälters 1 wieder nach unten zurückfällt (Pfeile 25). Die so entstehende Mischtrombe durchwirbelt das eingebrachte Material, sodass ein guter Mischeffekt erzielt wird. Ein geringer Anteil des in den Behälter 1 eingebrachten, bereits zerkleinerten Materiales gelangt jedoch durch den Ringspalt 11 hindurch in den unteren Innenraumteil 10 unter der Trägerscheibe 9 und wird dort durch die Werkzeuge 12 bearbeitet. Nach einer kurzen Einlaufzeit stellt sich ein Gleichgewichtszustand ein zwischen dem von der Schnecke 17 aus der Austragöffnung 15 und daher aus dem Ringraum 10 abgeführten Material und dem durch den Ringspalt 11 von oben in den Ringraum 10 zugeführten Material. Dies hat zur Folge, dass es sehr unwahrscheinlich bzw. sogar unmöglich ist, dass ein einmal in den Behälter 1 eingebrachtes Kunststoffteilchen in das Schneckengehäuse 16 gelangt, ohne zuvor eine ausreichende Verweilzeit im Behälter 1 verbracht zu haben bzw. ohne durch die Werkzeuge 12, 21 genügend bearbeitet worden zu sein. Die die Austragöffnung 15 durchsetzende Kunststoffmenge, welche von der Schnecke 17 abgeführt wird, hat daher annähernd gleichmäßige Beschaffenheit, insbesondere, was die Temperatur und die Größe der Kunststoffteilchen betrifft. Die Schnecke 17 muss daher weniger Arbeit in die Kunststoffmasse einbringen, um die Kunststoffmasse auf den gewünschten Plastifizierungsgrad zu bringen, was zur Folge hat, dass hohe thermische Spitzen-Beanspruchungen auf das Kunststoffmaterial im Schneckengehäuse 16 entfallen. Dadurch wird das Kunststoffmaterial geschont und an Energie für den Antrieb der Schnecke 17 wesentlich gespart.

Die Werkzeuge 12 müssen nicht unbedingt von schwenkbar am Rotor 7 gebildeten Bauteilen gebildet sein. Es ist z.B. möglich, die Werkzeuge 12 schaufelförmig auszubilden und gegebenenfalls diese Schaufeln bzw. auch Werkzeuge 12 in der in Fig. 2 dargestellten Form starr am Rotor 7 festzulegen. Für die Werkzeuge 12 kann auch eine Ausbildung Verwendung finden, wie sie in Fig. 2 für die Werkzeuge 21 dargestellt ist. Eine weitere Variante besteht darin, dass die im Raum 10 umlaufenden Werkzeuge von an der Welle 4 oder am Rotor 7 befestigten Balken gebildet sind, die sich radial von der Welle 4 erstrecken können, aber nicht müssen. Eine weitere Variante besteht darin, dass statt des Rotors 7 unterhalb der Trägerscheibe 9 eine weitere Trägerscheibe auf der Welle 4 befestigt ist, welche die weiteren Werkzeuge 12 trägt. Hiebei ist es möglich, diese weiteren Werkzeuge in derselben Weise auszubilden wie die von der oberen Trägerscheibe 9 getragenen Werkzeuge.

Wie aus Fig. 1 ersichtlich, sind am Rotor 7 mehrere Sätze von Werkzeugen 12 übereinander angeordnet. Die Ausbildung aller Werkzeuge muss nicht gleich sein, beispielsweise können einzelne Werkzeuge 12 starr am Rotor 7 befestigt sein, andere Werkzeuge 12 pendelnd. Ebenso können Form bzw. Größe bzw. Anordnung der Werkzeuge 12 in den einzelnen Sätzen voneinander abweichen, gegebenenfalls auch innerhalb des einzelnen Satzes.

Form und Größe des Ringraumes 10 richten sich nach dem ins Auge gefassten Anwendungsgebiet. Der Abstand h, in welchem die Unterseite der Trägerscheibe 9 vom Boden 3 des Behälters 1 liegt, hängt von der Höhe des Rotors 7 ab und auch von der Größe und Lage der Austragöffnung 15. Günstige Verhältnisse ergeben sich, wenn die Höhe h des Ringraumes 10 mindestens gleich, vorzugsweise wesentlich größer ist als der Durchmesser d der Schnecke 17 bzw. dem Innendurchmesser des Schneckengehäuses 16. Im in Fig. 1 dargestellten Ausführungsbeispiel ist h : d = 1,56 und es ist die Anordnung zweckmäßig so getroffen, dass der von der Trägerscheibe 9 abgedeckte, außerhalb des Rotors 7 liegende Teil des Ringraumes 10 annähernd quadratischen Querschnitt hat. Andere Querschnittsformen dieses Ringraumes sind möglich, insbesondere dann, wenn andere Werkzeuge in diesem Ringraum 10 umlaufen, z.B. ein als Schaufelrad ausgebildeter Rotor 7. Der Anschluss des Schneckengehäuses 16 an den Behälter 1 muss nicht tangential sein. Es ist, falls gewünscht, durchaus möglich, das Stirnende des Schneckengehäuses 16 in radialer Richtung oder außermittig an den Behälter 1 anzuschließen, wobei dann die Befüllung der Schnecke 17 von der Stirnseite derselben her erfolgt.

Wie ersichtlich, ist für die beschriebene Betriebsweise die Größe des Ringspaltes 11 von Einfluss. Dieser Ringspalt soll nicht zu groß sein, damit verhindert wird, dass größere Materialteilchen durch diesen Ringspalt 11 hindurchtreten können. Anderseits soll dieser Spalt auch nicht zu klein sein, da sonst zu wenig Material unter die Trägerscheibe 9 in den unteren Innenraumteil 10 gelangt und somit die Gefahr besteht, dass die Schnecke 17 ungenügend befüllt wird. Um sich an unterschiedliche, zu verarbeitende Materialien anpassen zu können, kann die Größe des Ringspaltes 11 veränderlich ausgebildet sein, z.B. mittels von der Trägerscheibe 9 getragener, relativ zu ihr verstellbarer Bauteile, durch welche der Spalt 11 teilweise abgedeckt bzw. in vergrößerter Breite freigegeben werden kann. Solche Bauteile können gegebenenfalls auch an der Wand 2 des Behälters 1 vorgesehen sein. Versuche haben gezeigt, dass sich günstige Werte für die in radialer Richtung gemessene Breite s (Fig. 1) des Ringspaltes 11 im Bereich von 20 bis 150 mm, vorzugsweise 20 bis 100 mm ergeben, unabhängig vom Durchmesser des Aufnahmebehälters 1, jedoch abhängig von der Art des zu verarbeitenden Gutes.

Es ist zweckmäßig, die im unteren Innenraumteil 10 des Aufnahmebehälters 1 befindlichen Werkzeuge 12 so zu gestalten, dass sie das in diesem Innenraumteil 10 befindliche Kunststoffmaterial weniger intensiv bearbeiten als die von der Trägerscheibe 9 getragenen, im oberen Innenraumteil 26 des Behälters 1 umlaufenden Werkzeuge 21.

## Patentansprüche

1. Vorrichtung zum wahlweise kontinuierlichen oder chargenweisen Aufbereiten von, insbesondere thermoplastischem, Kunststoffmaterial, mit einem Aufnahmebehälter (1) für das zu bearbeitende Material, in welchem um eine vertikale Achse (8) umlaufende, mittels einer den Boden (3) des Aufnahmebehälters (1) durchsetzenden Welle (4) angetriebene, auf das Material einwirkende Werkzeuge (21) vorgesehen sind, die von einer Tragerscheibe (9) getragen sind, und mit einer Schnecke (17) zum Abtransport des Materiales aus dem Aufnahmebehälter (1), deren Gehäuse (16) an eine Austragöffnung (15) des Aufnahmebehälters (1) angeschlossen ist, wobei die Austragöffnung (15) tiefer als die Umlaufbahn der Werkzeuge (21) und tiefer als die Trägerscheibe (9) angeordnet ist und wobei im Aufnahmebehälter (1) weitere bewegte Werkzeuge (12) unterhalb der Tragerscheibe (9) vorhanden sind, die das Material in die Austragöffnung (15) fördern, **dadurch gekennzeichnet, dass** der oberhalb der Trägerscheibe (9) befindliche obere Innenraumteil (26) des Behälters (1) über einen, zwischen dem Außenumfang der Trägerscheibe (9) und der Seitenwand (2) des Aufnahmebehälters (1) bestehenden freien Ringspalt (11) mit einem im selben Aufnahmebehälter (1) befindlichen, unterhalb der Trägerscheibe (9) angeordneten unteren Innenraumteil (10) des Aufnahmebehälters (1) in Verbindung steht, in welchem die weiteren bewegten Wetkzeuge (12) und die Austragöffnung (15) angeordnet sind, wobei beim Umlauf der Trägerscheibe (9) ein Anteil des im oberen Innenraumteil (26) befindlichen Materiales durch den Ringspalt (11) hindurch in den unteren Innenraumteil (10) gelangt.

2. Vorrichtung nach Anspruch 1, **dadurch gekennzeichnet, dass** die weiteren bewegten Werkzeuge (12) an einem Rotor (7), vorzugsweise am Umfang desselben, befestigt sind, der mit der Welle (4) drehschlüssig verbunden ist.

3. Vorrichtung nach Anspruch 2, **dadurch gekennzeichnet, dass** der Rotor (7) von einem koaxial zur Welle (4) angeordneten Block gebildet ist, dessen Mantelfläche näher zur Achse (8) der Welle (4) liegt als der Umfang der Trägerscheibe (9), sodass unterhalb der Trägerscheibe (9) ein mit dem Ringspalt (11) in freier Verbindung stehender Ringraum (10) gebildet ist, in dem die weiteren bewegten Werkzeuge (12) umlaufen.

4. Vorrichtung nach Anspruch 2 oder 3, **dadurch gekennzeichnet, dass** die weiteren bewegten Werkzeuge (12) von am Rotor (7) um vertikale Achsen im Bereich des Umfanges des Rotors (7) schwenkbar aufgehängten Schlagwerkzeugen gebildet sind.

5. Vorrichtung nach Anspruch 4, **dadurch gekennzeichnet, dass** die weiteren Werkzeuge (12) um vertikale Bolzen (13) schwenkbar sind, die Ringnuten (14) des Umfanges des Rotors (7) durchsetzen.

6. Vorrichtung nach Anspruch 2 oder 3, **dadurch gekennzeichnet, dass** die weiteren bewegten Werkzeuge (12) von am Rotor (7) befestigten Schaufeln oder Messern gebildet sind, die gegebenenfalls nach außen entgegen der Umlaufrichtung (Pfeil 23) abgebogene oder abgewinkelte Flächen oder Kanten, insbesondere Schneidkanten (22), haben.

7. Vorrichtung nach Anspruch 1, 2 oder 3, **dadurch gekennzeichnet, dass** die weiteren Werkzeuge (12) von an der Welle (4) oder am Rotor (7) befestigten Balken gebildet sind.

8. Vorrichtung nach Anspruch 1, **dadurch gekennzeichnet, dass** auf der Welle (4) zwei Trägerscheiben übereinander befestigt sind, deren untere die weiteren bewegten Werkzeuge (12) trägt.

9. Vorrichtung nach einem der Ansprüche 1 bis 8, **dadurch gekennzeichnet, dass** die Umlaufbahn der weiteren bewegten Werkzeuge (12) zumindest teilweise auf der Höhe der Austragöffnung (15) des Aufnahmebehälters (1) liegt.

10. Vorrichtung nach einem der Ansprüche 1 bis 9, **dadurch gekennzeichnet, dass** mehrere Sätze weiterer bewegter Werkzeuge (12) übereinander, in Umfangsrichtung des Aufnahmebehälters (1) verteilt, vorhanden sind.

11. Vorrichtung nach einem der Ansprüche 1 bis 10, **dadurch gekennzeichnet, dass** die in radialer Richtung der Welle (4) gemessene Breite des freien Ringspaltes (11) 20 bis 150 mm, vorzugsweise 20 bis 100 mm, beträgt.

12. Vorrichtung nach einem der Ansprüche 1 bis 11, **dadurch gekennzeichnet, dass** das Gehäuse (16) der Schnecke (17) tangential an den Aufnahmebehälter (1) angeschlossen ist, sodass die Austragöffnung (15) am Mantel des Gehäuses (16) liegt.

13. Verfahren zum Aufbereiten von, insbesondere thermoplastischem, Kunststoffmaterial mittels in einem Aufnahmebehälter (1) um eine vertikale Achse umlaufender Werkzeuge (12, 21), wobei das Material aus dem Aufnahmebehälter (1) mittels einer Schnecke (17) ausgebracht wird, **dadurch gekennzeichnet, dass** das Material im selben Aufnahmebehälter (1) mittels zweier übereinander angeordneter Werkzeugsätze (12, 21) kontinuierlich in zwei aufeinander folgenden Stufen bearbeitet wird, wobei in der ersten, mittels des oberen Werkzeugsatzes (21) im oberen Innenraumteil (26) des Aufnahmebehälters (1) durchgeführten Stufe das Material vorzerkleinert und/oder vorgewärmt und/oder vorgetrocknet und/oder vorgemischt wird, und sodann vom oberen Werkzeugsatz (21) in den unteren Innenraumteil (10) desselben Aufnahmebehälters (1) eingebracht wird, in welchem in der zweiten, mittels des unteren Werkzeugsatzes (12) durchgeführten Stufe die gleiche Behandlung des Materiales, jedoch weniger intensiv als in der ersten Stufe, erfolgt und das Material von den Werkzeugen (12) der zweiten Stufe der Schnecke (17) zugeführt wird.

## Claims

1. A device for the continuous or alternatively batchwise preparation of a plastics material, in particular a thermoplastic plastics material, having a receiving container (1) for the material to be treated, in which container (1) there are provided tools (21) which circulate about a vertical axis (8), are driven by means of a shaft (4) passing through the base (3) of the receiving container (1) and act upon the material and which are borne by a bearer disc (9), and having a screw (17) for conveying the material away from the receiving container (1), the housing (16) of which screw (17) is joined up to a discharge opening (15) of the receiving container (1), wherein the discharge opening (15) is arranged lower than the circular path of the tools (21) and lower than the bearer disc (9) and wherein additional moving tools (12) are present in the receiving container (1), below the bearer disc (9), and convey the material into the discharge opening (15), **characterised in that** the upper part (26), located above the bearer disc (9), of the interior space of the container (1) is connected via a free annular gap (11), existing between the external circumference of the bearer disc (9) and the lateral wall (2) of the receiving container (1), to a lower part (10), located in the same receiving container (1) and arranged below the bearer disc (9), of the interior space of the receiving container (1), which lower part (10) of the interior space has the additional moving tools (12) and the discharge opening (15) arranged therein, a portion of the material located in the upper part (26) of the interior space reaching the lower part (10) of the interior space through the annular gap (11) upon rotation of the bearer disc (9).

2. A device according to Claim 1, **characterised in that** the additional moving tools (12) are secured to a rotor (7), preferably to the circumference thereof, connected to the shaft (4) in a rotationally-locked manner.

3. A device according to Claim 2, **characterised in that** the rotor (7) is formed by a block, arranged coaxially with the shaft (4), whose outer surface lies closer to the axis (8) of the shaft (4) than does the circumference of the bearer disc (9), so that an annular space (10) freely connected to the annular gap (11) is formed below the bearer disc (9), the additional moving tools (12) circulating in this annular space (10).

4. A device according to Claim 2 or 3, **characterised in that** the additional moving tools (12) are formed by striking tools pivotably suspended on the rotor (7) about vertical axes in the region of the circumference of the rotor (7).

5. A device according to Claim 4, **characterised in that** the additional tools (12) are pivotable about vertical pins (13) passing through annular grooves (14) in the circumference of the rotor (7).

6. A device according to Claim 2 or 3, **characterised in that** the additional moving tools (12) are formed by paddles or blades secured to the rotor (7) and optionally having surfaces or edges, in particular cutting edges (22), which are curved or bent outwards, against the circulating direction (arrow 23).

7. A device according to Claim 1, 2 or 3, **characterised in that** the additional tools (12) are formed by bars secured to the shaft (4) or to the rotor (7).

8. A device according to Claim 1, **characterised in that** two bearer discs are secured one above the other on the shaft (4), the lower thereof bearing the additional moving tools (12).

9. A device according to any one of Claims 1 to 8, **characterised in that** the circular path of the additional moving tools (12) lies at least partially level with the discharge opening (15) of the receiving container (1).

10. A device according to any one of Claims 1 to 9, **characterised in that** a plurality of sets of additional moving tools (12) are present one above the other, distributed in the circumferential direction of the receiving container (1).

11. A device according to any one of Claims 1 to 10, **characterised in that** the width, measured in the radial direction of the shaft (4), of the free annular gap (11) is 20 to 150 mm, preferably 20 to 100 mm.

12. A device according to any one of Claims 1 to 11, **characterised in that** the housing (16) of the screw (17) is joined to the receiving container (1) in a tangential manner, so that the discharge opening (15) lies at the casing of the housing (16).

13. A method of preparing a plastics material, in particular a thermoplastic plastics material, by means of tools (12, 21) circulating, about a vertical axis, in a receiving container (1), wherein the material is removed from the receiving container (1) by means of a screw (17), **characterised in that** the material is continuously treated in the same receiving container (1) in two successive stages by means of two tool sets (12, 21) arranged one above the other, wherein in the first stage, carried out in the upper part (26) of the interior space of the receiving container (1) by means of the upper tool set (21), the material is crushed coarsely and/or preheated and/or predried and/or premixed and is then introduced into the lower part (10) of the interior space of the same receiving container (1) by the upper tool set (21), in which lower part (10) of the interior space, in the second stage, carried out by means of the lower tool set (12), the same treatment of the material takes place, however less intensively than in the first stage, and the material is supplied to the screw (17) by the tools (12) of the second stage.

## Revendications

1. Dispositif pour traiter au choix en continu ou par charges un matériau plastique, notamment thermoplastique, avec un récipient (1) pour recevoir le matériau à traiter, dans lequel sont prévus des outils (21) agissant sur le matériau, qui circulent autour d'un axe vertical (8) en étant entraînés au moyen d'un arbre (4) traversant le fond (3) du récipient (1) et qui sont portés par un disque porteur (9), et avec une vis sans fin (17) destinée à évacuer le matériau du récipient (1) et dont le carter (16) est raccordé à une ouverture d'évacuation (15) du récipient (1), l'ouverture d'évacuation (15) étant disposée plus bas que la voie de circulation des outils (21) et plus bas que le disque porteur (9), et d'autres outils mobiles (12) étant présents en dessous du disque porteur (9) dans le récipient (1), qui transportent le matériau dans l'ouverture d'évacuation (15), **caractérisé en ce que** la partie supérieure (26) de l'espace intérieur du récipient (1), située au-dessus du disque porteur (9), communique au moyen d'une fente annulaire libre (11), présente entre la circonférence extérieure du disque porteur (9) et la paroi latérale (2) du récipient (1), avec une partie inférieure (10) de l'espace intérieur du récipient (1), située dans le même récipient (1) en dessous du disque porteur (9), dans laquelle sont disposés les autres outils mobiles (12) et l'ouverture d'évacuation (15), une partie du matériau présent dans la partie supérieure (26) de l'espace intérieur passant, lors de la circulation du disque porteur (9), par la fente annulaire (11) dans la partie inférieure (10) de l'espace intérieur.

2. Dispositif selon la revendication 1, **caractérisé en ce que** les autres outils mobiles (12) sont fixés sur un rotor (7), de préférence sur la périphérie de ce dernier, le rotor (7) étant relié en solidarité de rotation à l'arbre (4).

3. Dispositif selon la revendication 2, **caractérisé en ce que** le rotor (7) est formé par un bloc disposé coaxialement à l'arbre (4) et dont la surface extérieure est plus proche de l'axe (8) de l'arbre (4) que la circonférence du disque porteur (9), de sorte qu'un espace annulaire (10), en libre communication avec la fente annulaire (11) et dans lequel circulent les autres outils mobiles (12), est formé en dessous du disque porteur (9).

4. Dispositif selon la revendication 2 ou 3, **caractérisé en ce que** les autres outils mobiles (12) sont formés par des outils de battage montés sur le rotor (7) à pivotement autour d'axes verticaux dans la région de la périphérie du rotor (7).

5. Dispositif selon la revendication 4, **caractérisé en ce que** les autres outils mobiles (12) sont pivotants autour de broches verticales (13) qui traversent des rainures annulaires (14) de la périphérie du rotor (7).

6. Dispositif selon la revendication 2 ou 3, **caractérisé en ce que** les autres outils mobiles (12) sont formés par des ailettes ou des couteaux fixés sur le rotor (7), qui possèdent éventuellement des faces ou arêtes courbées ou coudées vers l'extérieur à l'encontre de la direction de circulation (flèche 23), notamment des arêtes de coupe (22).

7. Dispositif selon la revendication 1, 2 ou 3, **caractérisé en ce que** les autres outils mobiles (12) sont formés par des barres fixées sur l'arbre (4) ou sur le rotor (7).

8. Dispositif selon la revendication 1, **caractérisé en ce que** deux disques porteurs sont fixés en superposition sur l'arbre (4), le disque porteur inférieur portant les autres outils mobiles (12).

9. Dispositif selon l'une quelconque des revendications 1 à 8, **caractérisé en ce que** la voie de circulation des autres outils mobiles (12) se situe au moins partiellement à hauteur de l'ouverture d'évacuation (15) du récipient (1).

10. Dispositif selon l'une quelconque des revendications 1 à 9, **caractérisé en ce que** plusieurs groupes d'autres outils mobiles (12) sont présents en superposition, en étant répartis dans la direction circonférentielle du récipient (1).

11. Dispositif selon l'une quelconque des revendications 1 à 10, **caractérisé en ce que** la largeur, mesurée dans la direction radiale de l'arbre (4), de la fente annulaire libre (11) est comprise entre 20 et 150mm, de préférence entre 20 et 100 mm.

12. Dispositif selon l'une quelconque des revendications 1 à 11, **caractérisé en ce que** le carter (16) de la vis sans fin (17) est raccordé tangentiellement au récipient (1), de sorte que l'ouverture d'évacuation (15) se trouve sur la surface extérieure du carter (16).

13. Procédé pour traiter un matériau plastique, notamment thermoplastique, au moyen d'outils (12, 21) circulant autour d'un axe vertical dans un récipient (1), le matériau étant évacué du récipient (1) au moyen d'une vis sans fin (17), **caractérisé en ce que** le matériau est, dans le même récipient (1), traité en continu en deux étapes successives au moyen de deux groupes d'outils (12, 21) disposés en superposition, le matériau étant, au cours de la première étape exécutée au moyen du groupe supérieur d'outils (21) dans la partie supérieure (26) de l'espace intérieur du récipient (1), pré-broyé et/ou préchauffé et/ou pré-séché et/ou pré-mélangé, puis étant introduit par le groupe supérieur d'outils (21) dans la partie inférieure (10) de l'espace intérieur du même récipient (1), dans laquelle s'effectue, au cours de la deuxième étape exécutée au moyen du groupe inférieur d'outils (12), le même traitement du matériau mais de façon moins intensive qu'au cours de la première étape, et le matériau étant apporté à la vis sans fin (17) par les outils (12) de la deuxième étape.
